(19) Europäisches Patentamt
European Patent Office
Office européen des brevets

(11) Publication number: **0 246 613 B1**

(12) # EUROPEAN PATENT SPECIFICATION

(45) Date of publication of patent specification: **30.09.92**

(51) Int. Cl.[5]: **C08F 20/18**, G02B 1/04

(21) Application number: **87107271.6**

(22) Date of filing: **19.05.87**

(54) **Plastic optical fiber.**

(30) Priority: **19.05.86 JP 112534/86**

(43) Date of publication of application:
**25.11.87 Bulletin 87/48**

(45) Publication of the grant of the patent:
**30.09.92 Bulletin 92/40**

(84) Designated Contracting States:
**CH DE FR GB IT LI NL SE**

(56) References cited:
**EP-A- 0 097 325** **EP-A- 0 141 610**
**DE-A- 3 106 231** **GB-A- 2 176 794**
**GB-A- 2 178 190** **US-A- 4 505 543**

(73) Proprietor: **HITACHI, LTD.**
**6, Kanda Surugadai 4-chome**
**Chiyoda-ku, Tokyo 101(JP)**

(72) Inventor: **Taketani, Noriaki**
**17-1-201, Moriyamacho-3-chome**
**Hitachi-shi(JP)**
Inventor: **Tanno, Seikichi**
**1415-24, Ishinazakacho**
**Hitachi-shi(JP)**
Inventor: **Eguchi, Shuji**
**17-2-501, Moriyamacho-3-chome**
**Hitachi-shi(JP)**
Inventor: **Okabe, Yoshiaki**
**17-2-102, Moriyamacho-3-chome**
**Hitachi-shi(JP)**
Inventor: **Terao, Hiromu**
**20-3, Ayukawacho-6-chome**
**Hitachi-shi(JP)**
Inventor: **Shimura, Masato**
**20-3, Ayukawacho-6-chome**
**Hitachi-shi(JP)**
Inventor: **Asano, Hideki**
**2812-13, Senbacho**
**Mito-shi(JP)**
Inventor: **Abe, Tomiya**
**Minamigaokaryo 3923, Ogitsucho**
**Hitachi-shi(JP)**

(74) Representative: **Strehl, Schübel-Hopf, Groening**
**Maximilianstrasse 54 Postfach 22 14 55**
**W-8000 München 22(DE)**

**EP 0 246 613 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

This invention relates to a plastic optical fiber having an excellent heat resistance.

Prior efforts in developing an improved plastic optical fiber have been mainly directed, as described for example in U.S. Patent No. 4,591,626, to obtaining an optical fiber having excellent heat resistance by the use of thermoplastic resins. However, no consideration has been given on incorporation of a multifunctional monomer for improving the heat resistance further. On the other hand, although a plastic optical fiber in which a multifunctional monomer was incorporated had also been investigated and showed an improvement in the heat resistance, no due attention has been paid in respect to improving the mechanical properties of the resulting fiber, including bending strength and impact strength.

In the former plastic optical fiber of the prior arts mentioned above, little attention was paid on improvement of the heat resistance, and resultantly had a problem of rather narrow usable temperature ranges. Further, since the forming process required a step of drawing the thermoplastic fiber, the fiber had another problem in that the transmission loss was increased in the course of orientation of the fiber. In the latter monomer-incorporated fiber, although the fiber can be formed without drawing and consideration was given for improving the heat resistance, no attention was paid with respect to the mechanical strength, and hence it had a problem in that the product fiber tended to fracture by bending etc. and was troublesome to the handling.

SUMMARY OF THE INVENTION

The object of the present invention is to provide a plastic optical fiber which is free from transmission loss in the course of orientation, and has an improved heat resistance and shows an enhanced mechanical strength when used.

According to the first aspect of this invention, there is provided a plastic optical fiber with a core comprising a copolymer which employs, as the essential constituents, a (meth)acrylic ester I represented by the following formula [I]

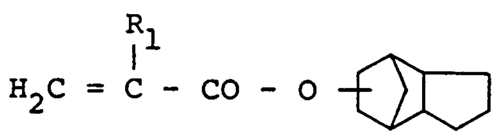

... [I] ,

wherein $R_1$ denotes hydrogen or methyl; a (meth)acrylic ester II represented by the following formula [II]

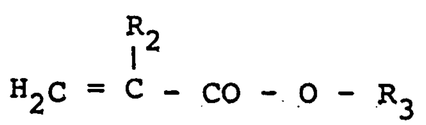

... [II] ,

wherein $R_2$ denotes hydrogen or methyl, and $R_3$ denotes $C_1$-$C_8$ alkyl, cycloalkyl or aromatic group; and a multifunctional monomer; the multifunctional monomer being contained in an amount of at least 3% by weight.

The multifunctional monomer is contained in an amount of at least 3% by weight. If the content is less than 3% by weight, crosslinking density in the copolymer is not sufficiently high, and resultantly the heat resistance is not satisfactory.

The multifunctional monomer is preferably at least one compound selected from the group consisting of ethylene glycol dimethacrylate, trimethylolpropane trimethacrylate, triallyl isocyanurate, diallyl phthalate, diallyl isophthalate, and diethylene glycol bisallylcarbonate.

According to the second aspect of this invention, there is provided a plastic optical fiber with a core comprising a copolymer which employs, as the essential constituents, a (meth)acrylic ester I represented by the following formula [I]

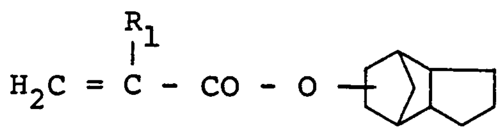 ... [I] ,

wherein $R_1$ denotes hydrogen or methyl; a (meth)acrylic ester II represented by the following formula [II]

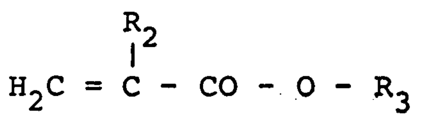 ... [II] ,

wherein $R_2$ denotes hydrogen or methyl, and $R_3$ denotes $C_1$-$C_8$ alkyl, cycloalkyl, or aromatic group; a multifunctional monomer; and an antioxidant.

The multifunctional monomer is contained in an amount of at least 3% by weight. A thermosetting resin composition is obtained by the incorporation of the multifunctional monomer into the above-mentioned esters I and II, which composition can then be copolymerized, namely cured under heating, to obtain the core for a plastic optical fiber of this invention.

The multifunctional monomer is preferably at least one compound selected from the group consisting of ethylene glycol dimethacrylate, trimethylolpropane trimethacrylate, triallyl isocyanurate, diallyl phthalate, diallyl isophthalate, and diethylene glycol bisallylcarbonate.

When the plastic optical fiber is used under a high temperature atmosphere, 0.1 to 5% by weight of an antioxidant is advantageously incorporated therein to prevent the thermal deterioration of the fiber.

DETAILED DESCRIPTION OF THE INVENTION

This invention will be further explained in detail hereafter. The invention relates to a plastic optical fiber. The optical fiber of this invention comprises a core made of a copolymer which employs, as the essential constituents, a (meth)acrylic ester I represented by the following formula [I]

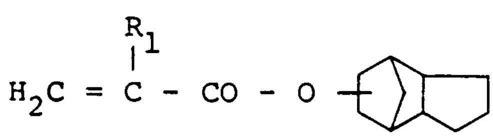 ... [I] ,

wherein $R_1$ denotes hydrogen or methyl; a (meth)acrylic ester II represented by the following formula II

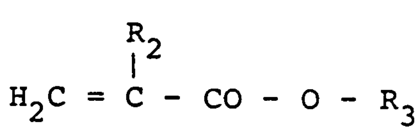 ... [II] ,

wherein $R_2$ denotes hydrogen or methyl, and $R_3$ denotes $C_1$-$C_8$ alkyl, cycloalkyl, or aromatic group; and a multifunctional monomer in an amount of at least 3% by weight.

The (meth)acrylic ester I, one of the constituents of the copolymer of this invention, has a tricyclo-[5.2.1.$0^{2.6}$]decan-8-yl group which is sterically bulky and possesses a large expulsion volume, as the side chain. Resultantly, the copolymer produces excellent effects of the improved heat resistance and the lowered hygroscopicity of the product.

The incorporation thereto of the (meth)acrylic ester II, another of the constituents, results an improvement of the mechanical strength. Moreover, the incorporation of multifunctional monomer further improves the heat resistance of the copolymer to provide it with a thermosetting resin properties, which enables

adoptation of a continuous polymerization spinning possible. Detailed descriptions on the continuous polymerization spinning are disclosed in Japanese Patent Application No. 105,643/85. That is, a continuous polymerization spinning is a method of spinning which comprises charging a monomer into a slender pipe by means of a pump etc. and allowing the monomer to polymerize under heating of the pipe while it passes through the pipe.

Since polymer fibers can be obtained without a drawing step by use of this method, no orientation takes place for the polymer which results in a low transmission loss when the polymer is used as a optical fiber. If the monomer is not thermosetting, the shape of the polymer obtained after passing the monomer through a slender pipe is unstable, and the polymer cannot be used for an optical fiber.

As examples of the multifunctional monomer, the third constituent, there may be mentioned, as shown specifically below, multi-vinyl, multi-allyl and multi-(meth)acrylic compounds. However, other monomers may also be used so long as they have a crosslinking ability without being limited to those listed below. Further, they may be used in a combination of two or more thereof. Examples of the multifunctional monomer are enumerated below:

p-divinylbenzene, diallyl (iso)phthalate, triallyl (iso)cyanurate, hexamethylene glycol dimethacrylate, decamethylene glycol dimethacrylate, ethyl sulfide dimethacrylate, p,p'-xylylenyl dimethacrylate, cyclohexanediol 1,4-dimethacrylate, ethylidene dimethacrylate, ethylene glycol dimethacrylate, diethylene glycol dimethacrylate, triethylene glycol dimethacrylate, di- or tri-(meth)acrylic acid esters of tris(2-hydroxyethyl)-isocyanuric acid, di- or trimethacrylic acid esters of glycerol, triacryl cyanurate, trimethacryl isocyanurate, trimethylolpropane trimethacrylate, pentaerythritol tetramethacrylate, and diethylene glycol bisallylcarbonate.

Mechanical strength enhanced by incorporation of (meth)acrylic ester II can be further increased by incorporating thereto diethylene glycol bisallylcarbonate.

This invention will be further explained in detail below with reference to Examples, however, this invention is not limited thereby.

Example 1

A mixture of 70 parts by weight of tricyclo[5.2.1.0$^{2.6}$]decan-8-yl methacrylate, 20 parts by weight of methyl methacrylate, 10 parts by weight of ethylene glycol dimethacrylate, and 0.5 part by weight of lauroyl peroxide was placed in a tank, and transferred therefrom under pressure into a Teflon® tube of 1 mm inside diameter by means of a pump. The Teflon® tube was placed in a water tank kept at 80 °C. The rate of flow of the monomer mixture was set such that the mixture passes through the tube in about 3 minutes. A fibered product thus obtained was then heat-treated for 20 hours at 100 °C and then 20 hours at 130 °C to give a core for a plastic optical fiber. A plastic optical fiber was completed by applying onto the core a clad having a lower refractive index than that of the core. The core portion obtained above had a $T_g$ (glass transition temperature determined from the inflection point of the thermal expansion coefficient) of 153 °C and gave an allowable bend radius of 50 mm.

Examples 2 to 7

The procedures of Example 1 were repeated except that the composition of the monomer mixture placed in the tank was substituted with those shown in Table 1. Core portions for plastic optical fibers having the characteristic properties shown in Table 1 were obtained in those cases.

Table 1

| Example No. | 1 | 2 | 3 | 4 | 5 | 6 | 7 |
|---|---|---|---|---|---|---|---|
| TCDMA*1 | 70 | 70 | 70 | 70 | 70 | 50 | 50 |
| MMA*2 | 20 | 20 | 20 | 20 | 15 | 40 | 30 |
| EGDM*3 | 10 | - | 5 | - | 5 | 5 | 15 |
| CR-39*4 | - | - | 5 | 5 | 5 | 5 | 5 |
| TMP*5 | - | 10 | - | 5 | 5 | - | - |
| Passage time (min) | 3 | 3 | 4 | 4 | 4 | 5 | 5 |
| $T_g$ (°C) | 133 | 140 | 118 | 122 | 126 | 111 | 117 |
| Bend radius (mm) | 50 | 63 | 8 | 13 | 20 | 2 | 4 |

Note:

*1 : Tricyclo[5.2.1.0$^{2.6}$]decan-8-yl methacrylate

*2 : Methyl methacryalte

*3 : Ethylene glycol dimethacrylate

*4 : Diethylene glycol bisallylcarbonate

*5 : Trimethylolpropane trimethacrylate

As described in the foregoing, this invention has an effect of providing a plastic optical fiber excellent in the heat resistance and mechanical strength by use of a thermosetting resin for the core. Further, since a fibered polymer can be formed without drawing according to this invention, it has also an effect of decreasing the light transmission loss of optical fibers by the prior arts which is due to the drawing formation.

**Claims**

1. A plastic optical fiber comprising a clad and a core which is made of a copolymer characterized in that the copolymer comprises, as the essential monomeric constituents, a (meth)acrylic ester I represented by the following formula [I]

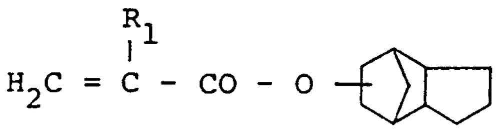 ... [I]

wherein $R_1$ denotes hydrogen or methyl; a (meth)acrylic ester II represented by the following formula [II]

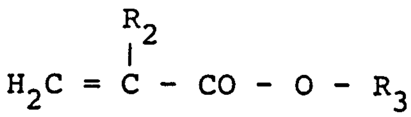 ... [II]

wherein $R_2$ denotes hydrogen or methyl, and $R_3$ denotes $C_1$-$C_8$ alkyl, cycloalkyl or an aromatic group; and a multifunctional monomer; the multifunctional monomer being contained in an amount of at least 3% by weight.

2. A plastic optical fiber according to Claim 1, wherein the multifunctional monomer is at least one compound selected from the group consisting of ethylene glycol dimethacrylate, trimethylolpropane trimethacrylate, triallyl isocyanurate, diallyl phthalate, diallyl isophthalate, and diethylene glycol bisallylcarbonate.

3. A plastic optical fiber according to Claim 1 or 2, wherein the copolymer further comprises an antioxidant.

**Patentansprüche**

1. Optische Kunststoffaser, die einen Mantel und einen Kern, der aus einem Copolymer gebildet ist, umfaßt, dadurch gekennzeichnet, daß das Copolymer als wesentliche Monomerbestandteile einen (Meth)acrylsäureester I, dargestellt durch die folgende Formel [I]

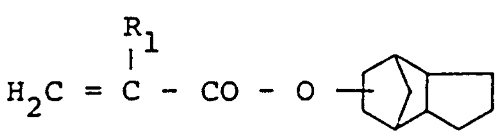 ... [I]

worin $R_1$ Wasserstoff oder Methyl bedeutet; einen (Meth)acrylsäureester (II), dargestellt durch die folgende Formel [II]

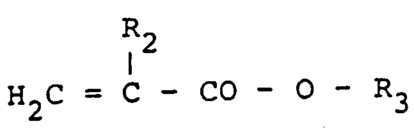 ... [II]

worin $R_2$ Wasserstoff oder Methyl bedeutet, und $R_3$ $C_1$-$C_8$-Alkyl, Cycloalkyl oder eine aromatische Gruppe bedeutet, und ein multifunktionelles Monomer umfaßt, wobei das multifunktionelle Monomer in einer Menge von mindestens 3 Gew.-% vorliegt.

2. Optische Kunststoffaser gemäß Anspruch 1, worin das multifunktionelle Monomer mindestens eine aus der Gruppe Ethylenglycoldimethacrylat, Trimethylolpropantrimethacrylat, Triallylisocyanurat, Diallylphthalat, Diallylisophthalat und Diethylenglycolbisallylcarbonat ausgewählte Verbindung ist.

3. Optische Kunststoffaser gemäß Anspruch 1 oder 2, worin das Copolymer außerdem ein Antioxodationsmittel enthält.

## Revendications

1. Fibre optique en plastique comprenant un placage et un noyau qui est fait d'un copolymère, caractérisée en ce que le copolymère comprend, comme constituants monomériques essentiels, un ester (méth)acrylique I répondant à la formule [I] suivante :

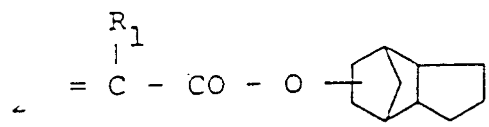

... [I]

dans laquelle $R_1$ représente un atome d'hydrogène ou méthyle ; un ester (méth)acrylique II répondant à la formule [II] suivante :

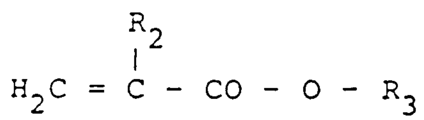

... [II]

dans laquelle $R_2$ représente un atome d'hydrogène ou un radical méthyle, et $R_3$ représente un radical alcoyle ayant de 1 à 8 atomes de carbone, un radical cycloalcoyle ou un groupe aromatique ; et un monomère multifonctionnel, le monomère multifonctionnel étant présent dans une proportion d'au moins 3% en poids.

2. Fibre optique en plastique selon la revendication 1 dans laquelle le monomère multifonctionnel est au moins un composé choisi dans le groupe constitué par le diméthacrylate d'éthylèneglycol, le triméthacrylate de triméthylolpropane, l'isocyanurate de triallyle, le phtalate de diallyle, l'isophtalate de diallyle et le bisallylcarbonate de diéthylène-glycol.

3. Fibre optique en plastique selon la revendication 1 ou 2, dans laquelle le copolymère comprend en outre un antioxydant.